# EUROPEAN PATENT APPLICATION

(11) **EP 4 512 562 A1**
(43) Date of publication of application: **26.02.2025**
(21) Application number: 24187772.9
(22) Date of filing: 10.07.2024
(51) Int. Cl.: B23K 9/167, B23K 9/28, B23K 9/29, B23K 9/32

(54) **SYSTEM FOR UTILIZING GAS LENS INTERFACING COLLETS**

(30) Priority: 11.07.2023 US 202363526019 P; 09.07.2024 US 202418767015
(71) Applicant: Illinois Tool Works Inc., Glenview IL 60025 (US)
(72) Inventor: HOEGER, Michael, Glenview, 60025 (US)
(74) Representative: HGF

(57) **Abstract**

Systems and methods are provided for utilizing gas lens interfacing collets. A welding-type system may include an electrode holder configured for use in conjunction with an arc welding based torch, a gas nozzle configured to engage a torch head of the welding-type torch, and a gas flow control component. The electrode holder may be configured to engage a non-consumable electrode. The gas flow control component may include a hole through which the electrode extends. The electrode holder may be secured via holder securing features configured to engage the electrode holder onto one or both of the torch head and a back cap at a back-end of the welding-type torch. The torch head may include a nozzle securing element configured to secure the gas nozzle onto the torch head. The gas flow control component may be secured in place by one or both of the gas nozzle and the electrode holder.

## Description

### BACKGROUND

Welding has become increasingly ubiquitous. Welding can be performed in an automated manner or in a manual manner (e.g., being performed by a human). Equipment or components used during welding operations may be driven using engines. For example, engines may be used to drive, for example, generators, power sources, etc. used during welding operations.

In some instances, conventional welding-type systems may have some limitations and/or disadvantages. For example, tungsten inert gas welding (TIG) torches used in some conventional welding-type systems may have some limitations with respect with applying shielding gases during welding operations.

Further limitations and disadvantages of conventional approaches will become apparent to one skilled in the art, through comparison of such approaches with some aspects of the present systems and methods set forth in the remainder of this disclosure with reference to the drawings.

### BRIEF SUMMARY

Aspects of the present disclosure relate to welding solutions. More specifically, various implementations in accordance with the present disclosure are directed to systems and methods for gas lens interfacing collet, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

### BRIEF DESCRIPTION OF THE DRAWINGS

Fig. 1 illustrates an example welding-type setup that may be used for welding-type operations.
Figs. 2A-2B illustrate example tungsten inert gas welding (TIG) torches.
Fig. 3 illustrates an example tungsten inert gas welding (TIG) torch with gas lens interfacing collet, in accordance with an embodiment based on the present disclosure.
Fig. 4 illustrates an example tungsten inert gas welding (TIG) torch with gas lens interfacing collet, in accordance with an alternative embodiment based on the present disclosure.

### DETAILED DESCRIPTION

As utilized herein, the terms "circuits" and "circuitry" refer to physical electronic components (e.g., hardware), and any software and/or firmware ("code") that may configure the hardware, be executed by the hardware, and/or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may operate, for example, on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic component (e.g., hardware) and any software and/or firmware ("code") that may configure the hardware, be executed by the hardware, and/or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not (e.g., by a user-configurable setting, factory trim, etc.).

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

Welding-type power, as used herein, refers to power suitable for welding, plasma cutting, induction heating, CAC-A (carbon arc cutting/air) and/or hot wire welding/preheating (including laser welding and laser cladding). Welding-type power supply, as used herein, refers to a power supply that can provide welding-type power. A welding-type power supply may include power generation components (e.g., engines, generators, etc.) and/or power conversion circuitry to convert primary power (e.g., engine-driven power generation, mains power, etc.) to welding-type power.

Welding-type operations, as used herein, comprise operations in accordance with any known welding technique, including flame welding techniques such as oxy-fuel welding, electric welding techniques such as shielded metal arc welding (e.g., stick welding), metal inert gas welding (MIG), tungsten inert gas welding (TIG), resistance welding, as well as gouging (e.g., carbon arc gouging), cutting (e.g., plasma cutting), brazing, induction heating, soldering, and/or the like.

Welding-type setup, as used herein, refers to any setup comprising welding related devices or equipment (e.g., welding power sources, welding torch, welding gear such as headwear and the like, auxiliary devices or systems, etc.) which are used in facilitating and/or in conjunction with welding-type operations.

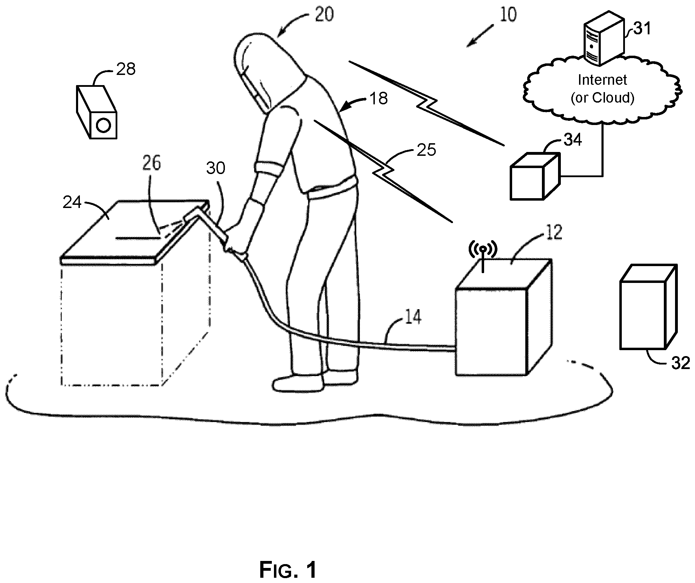

Fig. 1 illustrates an example welding-type setup that may be used for welding-type operations. Referring to Fig. 1, there is shown an example welding-type setup 10 in which an operator (user) 18 is wearing welding headwear 20 and welding a workpiece 24 using a torch 30 to which power is delivered by equipment 12 via a conduit 14, with weld monitoring equipment 28, which may be available for use in monitoring welding operations.

The equipment 12 may comprise a power source, optionally a source of a shield gas and, where wire/filler material is to be provided automatically, a wire feeder. Further, in some instances an engine 32 may be used to drive equipment or components used during welding operations. The engine 32 may comprise a gas engine or a liquefied petroleum (LP) engine. The engine 32 may drive generators, power sources, etc. used during welding operations.

The welding-type setup 10 of Fig. 1 may be configured to form a weld joint by any known welding-type technique. For example, optionally in any implementation, the welding equipment 12 may be arc welding equipment that provides a direct current (DC) or alternating current (AC) to a consumable or non-consumable electrode of a torch 30. The electrode delivers the current to the point of welding on the workpiece 24. In the welding-type setup 10, the operator 18 controls the location and operation of the electrode by manipulating the torch 30 and triggering the starting and stopping of the current flow. In other implementations, a robot or automated fixture may control the position of the electrode and/or may send operating parameters or trigger commands to the welding system. When current is flowing, an arc 26 is developed between the electrode and the workpiece 24. The conduit 14 and the electrode thus deliver current and voltage sufficient to create the electric arc 26 between the electrode and the workpiece. The arc 26 locally melts the workpiece 24 and welding wire or rod supplied to the weld joint (the electrode in the case of a consumable electrode or a separate wire or rod in the case of a non-consumable electrode) at the point of welding between electrode and the workpiece 24, thereby forming a weld joint when the metal cools.

Optionally in any implementation, the weld monitoring equipment 28 may be used to monitor welding operations. The weld monitoring equipment 28 may be used to monitor various aspects of welding operations, particularly in real-time (that is as welding is taking place). For example, the weld monitoring equipment 28 may be operable to monitor arc characteristics such as length, current, voltage, frequency, variation, and instability. Data obtained from the weld monitoring may be used (e.g., by the operator 18 and/or by an automated quality control system) to ensure proper welding.

As shown, the equipment 12 and headwear 20 may communicate via a link 25 via which the headwear 20 may control settings of the equipment 12 and/or the equipment 12 may provide information about its settings to the headwear 20. Although a wireless link is shown, the link may be wireless, wired, or optical.

Optionally in any implementation, equipment or components used during welding operations may be driven using engines. For example, the engine 32 may drive generators, power sources, etc. used during welding operations. In some instances, it may be desired to obtain information relating to used engines. For example, data relating to engines (and operations thereof) used during welding operations may be collected and used (e.g., based on analysis thereof) in monitoring and optimizing operations of these engines. The collection and use of such data may be performed telematically-that is, the data may be collected locally, subjected to at least some processing locally (e.g., formatting, etc.), and then may be communicated to remote management entities (e.g., centralized management locations, engine providers, etc.), using wireless technologies (e.g., cellular, satellite, etc.).

Optionally in any implementation, a dedicated controller (e.g., shown as element 34 in Fig. 1) may be used to control, centralize, and/or optimize data handling operations. The controller 34 may comprise suitable circuitry, hardware, software, or any combination thereof for use in performing various aspects of the engine related data handling operations. For example, the controller 34 may be operable to interface with the engine 32 to obtain data related thereto. The controller 34 may track or obtain welding related data (e.g., from weld monitoring equipment 28, from equipment 12, etc.). The controller 34 may then transmit the data (e.g., both engine related and weld related data), such as to facilitate remote monitoring and/or management, by way of wireless communications. This may be done using cellular and or satellite telematics hardware, for example.

In some example implementations, welding-type systems or setups, such as the welding-type setup 10, may be configured for collecting and reporting data relating to welding-type operations and/or to functions or components utilized during welding-type operations. For example, data from welding processes, power sources, welding-related accessories etc. in a weld setup may be collected. In this regard, the collected data may comprise, for example, current, voltage, wire feed speed, weld states, and numerous other power source parameters and settings.

The collected data may then be sent to remote entities (e.g., a remote server 31, which may be a manufacturer-controlled, Internet-based cloud server) and/or to local systems or devices (e.g., local PC, a tablet, a smartphone, etc.). The collected data may be utilized in enhancing welding-related systems and/or operations. For example, manufacturers may utilize the collected data to identify issues (and correct them) and/or devise modifications or improvements in the various components. Further, users may be able to generate reports on collected data to measure, document, and improve their processes.

In accordance with the present disclosure, improved tungsten inert gas welding (TIG) torches may be provided, particularly with respect to cost and ease of use, particularly by simplifying various aspects of the design of TIG torches, as described in more detail below.

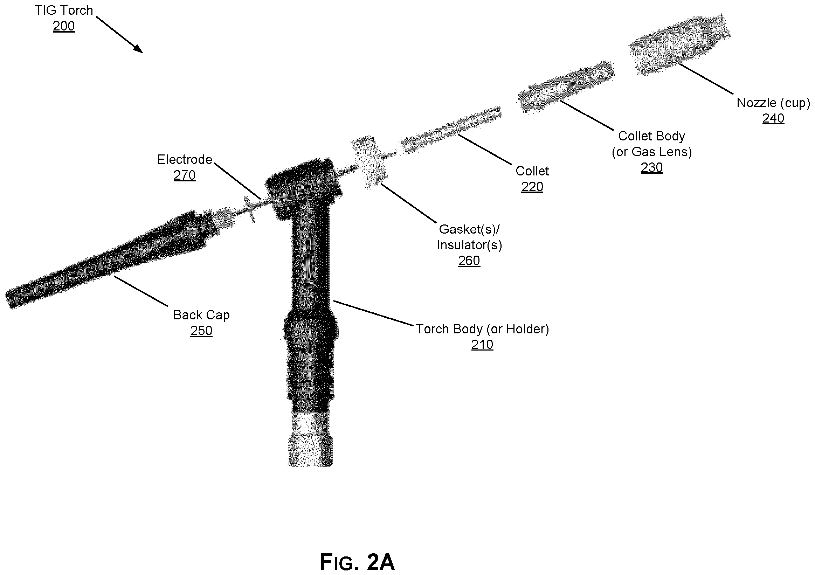

Figs. 2A-2B illustrate example tungsten inert gas welding (TIG) torches. Shown in Figs. 2A-2B are various example tungsten inert gas welding (TIG) torches. In this regard, the TIG torches illustrated in Figs. 2A-2B represent conventional designs compared to designs or solutions based on the present disclosure.

For example, shown in Fig. 2A is example tungsten inert gas welding (TIG) TIG torch 200. In this regard, as illustrated, the TIG torch 200 comprises a torch body (or holder) 210, a collet 220, a collet body (or gas lens-which may also be referred to as "gas lens assembly") 230, a nozzle (cup) 240, a back cap 250, one or more gaskets (or insulators) 260. The TIG torch 200 is configured to engage a non-consumable electrode 270 (e.g., tungsten electrode). The torch body (or holder) 210 may function as the main part to which other components may be engaged/coupled to assemble a complete torch.

As illustrated the torch body 210 may comprise a handle section, which the operator would use to hold the assembled torch, and a top section, to which the other components may be attached or otherwise coupled. The top section of the torch body 210 may have the shape of open cylinder with openings on both ends. Thus, when assembling the TIG torch 200, the electrode 270 may be engaged with (e.g., inserted into) the back cap 250. The electrode 270 is then inserted through the top section of the torch body 210, and then through the collet 220 (which in turn is engaged to and held by the collet body 230), with the electrode 270 extending through the combination of the collet 220 and the collet body 230, which, in combination with the back cap 250 at the back-end, maintain the electrode 270 in place. In this regard, in conventional solutions, the combination of the collet 220 and the collet body 230 may be configured to hold and maintain the electrode using compression forces. Further, the nozzle (cup) 240 is also added. In this regard, the nozzle (cup) 240 may be attached separately or in combination with the collet 220 and the collet body 230-that as, the three parts combined before being attached to the torch body 210.

The back cap 250 may be secured onto the back-end of the top section of the torch body 210 of the torch body 210. For example, the back cap 250 and the torch body 210 may have matching screwing/threading features to enable attaching (e.g., screwing) the back cap 250 onto the back-end of the top section of the torch body 210 of the torch body 210. Similarly, the collet body (or gas lens) 230 may be secured onto the front-end of the top section of the torch body 210 of the torch body 210. For example, the collet body (or gas lens) 230 and the torch body 210 may have matching screwing/threading features to enable attaching (e.g., screwing) the collet body (or gas lens) 230 onto the front-end of the top section of the torch body 210 of the torch body 210. The one or more gaskets (or insulators) 260 may be used to ensure (or enhance) sealing between the torch body 210 and the components attached thereto, particularly in the front-end (e.g., the collet body 230 and the nozzle (cup) 240). Further, the nozzle (cup) 240 is added.

While not shown, the TIG torch 210 may incorporate a gas line receptor (or the like) that may be used to supply an inert shielding gas (e.g., argon or helium) into the torch. The shielding gas may be routed through the torch (e.g., via suitable pipes or the likes), particularly via the torch body 210, so that it may be applied around the front part of the electrode 270 that is extending through the combination of the collet 220 and the collet body 230 and into the interior space within the nozzle (cup) 240. In this regard, in some implementations the collet body 230 may be configured to ensure flow of gas in that space.

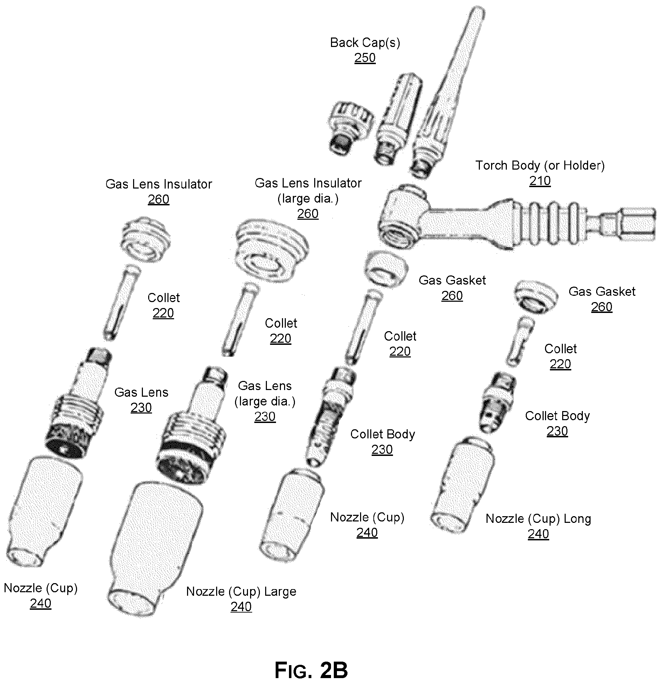

In various implementations, some of the components used in TIG torches may be modified (e.g., with respect to the size and/or shape thereof), such as to accommodate different size electrodes, to allow for different gas flow (e.g., increased flow, different flow characteristics, etc.), and/or to allow for different shielding spaces. In this regard, as illustrated in Fig. 2B in some instances, longer and/or larger nozzles (cups) 240 may be used. Further, shorter or longer back caps 250 may be used. Also, shorter or longer collets 220, and similarly different size (e.g., shorter or longer) collet bodies 230, may be used. In some instances, gas lenses may be used instead of regular collet bodies. In this regard, in some implementations, such gas lenses may be used to provide gas flow having particular characteristics-e.g., laminar flow. This may be done by incorporating suitable structures into the gas lenses, such as honeycomb based structures, as described in United State Patent Application Serial No. 15/676,065, filed on Aug. 14, 2017 (now issued United States Patent Serial No. 10,960,484 B2), which is incorporated herein by reference in its entirety. Such gas lenses are typically larger than regular collet bodies, and as such are typically used in conjunction with larger nozzles (cups). Further, where larger collet bodies and/or gas lenses are used, suitably large gaskets/insulators 260 are utilized, as illustrated in Fig. 2B.

Solutions based on the present disclosure provide improved TIG torches, particularly with respect to cost and ease of use, particularly by simplifying various aspects of the design of TIG torches-e.g., by reducing number of components used therein, by simplifying the design of some components and/or the manner by which components engaged one another, etc. For example, in various implementations based on the present disclosure, collet bodies (or gas lenses) may be eliminated, and modified collets (also referred to as "electrode holders" to highlight distinction over conventional collets) are used, which may be configured to securely hold the electrode without necessitating the use of collet bodies or gas lenses.

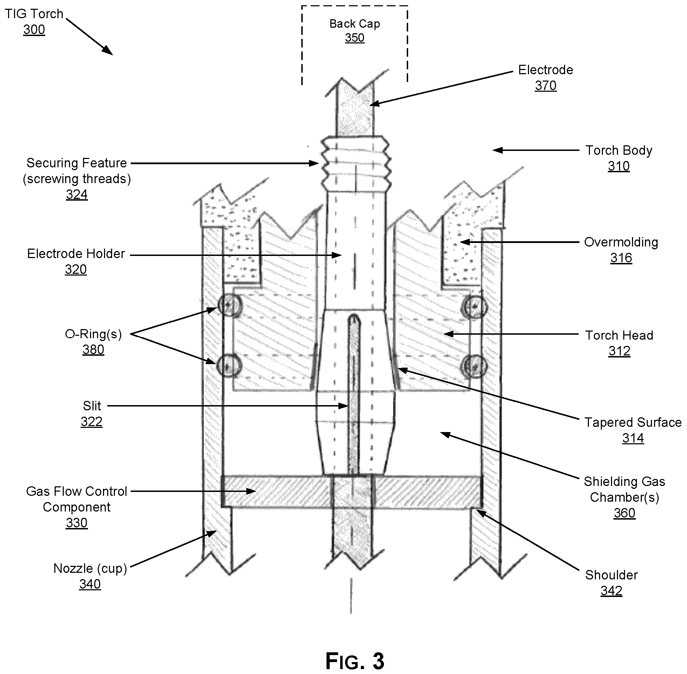

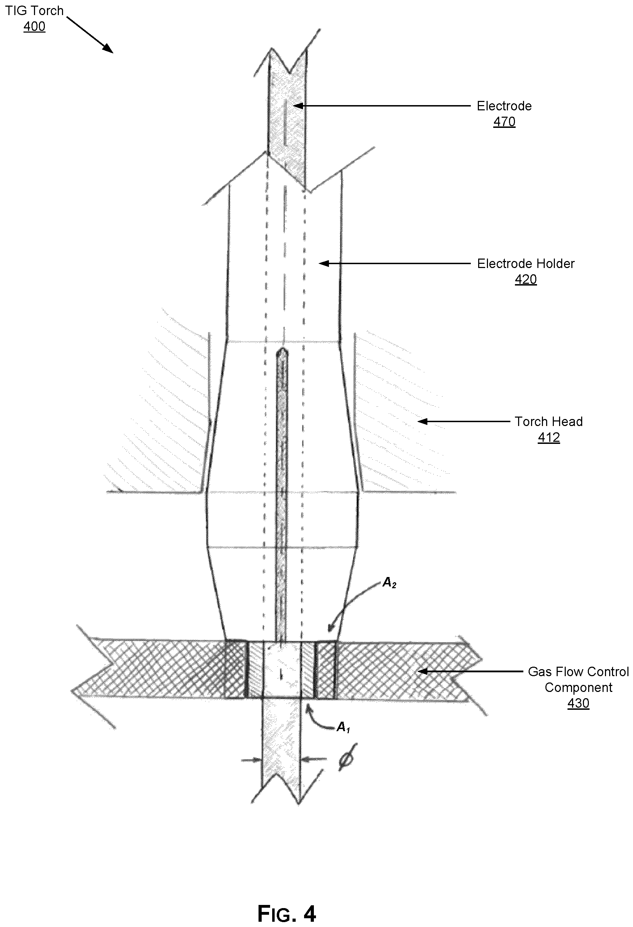

Further, the modified collets may be designed and/or implemented to ensure optimized contact with the torch body, thus ensuring that performance with respect to the shielding is not compromised in the absence of collet bodies/gas lenses. The modified collets may be configured to grip and maintain the electrode in different manner. For example, the combination of collet and collet body (or gas lens) may be replaced with single tension-based part (electrode holder), which engages electrodes using tension forces. In some implementations, simplified gas flow control components may be used in conjunction with the modified collets, to provide similar gas flow characteristics as what may be offered in conventional solutions, but at a fraction of the cost. Example implementations based on the present disclosure are described in more detail below, with respect to Figs. 3 and 4.

Fig. 3 illustrates an example tungsten inert gas welding (TIG) torch with gas lens interfacing collet, in accordance with an embodiment based on the present disclosure. Shown in Fig. 3 is tungsten inert gas welding (TIG) torch 300 (or portion thereof).

The TIG torch 300 represents an example embodiment based on the present disclosure. In particular, the TIG torch 300 is configured to incorporate a modified collet (referred to, as noted above, as electrode holder) 320. In this regard, as illustrated in Fig. 3, the TIG torch 300 comprises a torch body 310, which may be configured to engage the electrode holder 320. The electrode holder 320 is configured to engage and hold a non-consumable electrode 370 (e.g., tungsten electrode). Further, the electrode holder 320 may be configured for engaging the torch body 310, and be secured in place once engaged thereto.

The electrode holder 320 may be designed and/or configured for utilizing tensioning for gripping and holding the electrodes, rather than using compression as it is done in conventional solutions, such as the TIG torch(es) 200 illustrated and described with respect to Figs. 2A-2B. For example, the tensioning may be applied as a result of interaction between the electrode holder 320 and the electrode 370, and/or between the electrode holder 320 and the torch body 310. In this regard, the tensioning may be applied or otherwise effectuated in the course of securing the electrode holder 320 in place once engaged into the torch body 310. For example, in the example implementation illustrated in Fig. 3, the electrode holder 320 may be configured for engaging (e.g., by insertion into) a corresponding space within a torch head 312 at the front-end of the torch body 310.

Various mechanisms may be used to secure the electrode holder 320 in place. In this regard, the electrode holder 320 may be configured such that it may be secured in place using the torch body 310/the torch head 312 and/or a back cap 350, which may be substantially similar to the back cap(s) 250 described in Figs. 2A-3B. For example, the electrode holder 320 may comprise one or more securing features 324 for enabling or supporting securing the electrode holder 320. In some implementations, the electrode holder 320 may be configured such that it may be, e.g., secured by being screwed into the back cap 350 (or, alternatively, into the torch body 310/the torch head 312). In such implementations, the securing features 324 may comprise threading based on pre-determined characteristics (to match corresponding threading in the back cap 350 or, the torch body 310/the torch head 312) to facilitating screwing the electrode holder 320 to secure it in place.

In some implementations, the torch head 312 may incorporate a tapered surface 314, and the electrode holder 320 may incorporate a matching enlarged section, which may match the shape and size of the tapered section of the torch head 312. Thus, once the electrode holder 320 is inserted into the torch body 310/the torch head 312, the combination of the tapered surface 314 and corresponding enlarged section of the electrode holder 320 provide tight contact between the electrode holder 320 and the torch head 312. Thus, in an example implementation, the securing of the electrode holder 320 may be achieved by a combination of the clamping force applied by screwing the electrode holder 320 onto the back cap 350 (at the back-end) and the corresponding force applied at the front-end by the enlarged section of the electrode holder 320 on the contact interface with the tapered surface 314. Further, the tightness of the contact may increase once the electrode holder 320 is secured in place, providing optimal contact (e.g., for flow of electrical current into the electrode 370) between the electrode holder 320 and the torch head 312.

In some implementations, the securing mechanisms may also facilitate and support the tensioning function of the electrode holder 320. For example, securing the electrode holder 320 (e.g., by screwing it into the back cap 350) may provide clamping force that may further enhance the tight contact between the tapered face 314 and the enlarged section of the electrode holder 320. Accordingly, in some implementations, the TIG torch 300 (or components thereof) may incorporate one or more gripping features for facilitating and/or supporting creating and applying the tensioning grip on the electrode 370 by the electrode holder 320 once secured in place. For example, the electrode holder 320 may incorporate a slit 322 (or similar spacing), which may allow the electrode holder 320 to "collapse" on the electrode 370 when gripping force is applied onto the electrode holder 320 (by screwing it onto the back cap 350).

Once the electrode holder 320 engages the electrode 370, and is secured in place, a nozzle (cup) 340 is applied. In this regard, the TIG torch 300 may also incorporate nozzle securing elements 380 for securing the nozzle 340 in place, such as onto the onto the torch head 312. For example, the nozzle securing elements 380 may comprise one or more O-rings (e.g., 2 O-rings in the example implementation illustrated in Fig. 3). However, it should be understood the disclosure is not limited to use of O-ring (or similar designs), and other securing mechanisms and features based thereon (e.g., threading features, snapping features, etc.) may be used. In some implementations, the O-rings may be replaceable, to enable replacing them if/when the nozzle securing weakens (e.g., from repetitive use). In some implementations, the torch head 310 may incorporate overmolding 316 configured to engage the nozzle 340, to further enhance the seal between the nozzle 340 and the torch head 312.

With the nozzle 340 installed, an inert shielding gas may be injected, such via the torch head 312, into the space within the nozzle 340. In this regard, one or both of the torch head 312 and the electrode holder 320 may incorporate features (holes, pipes, etc., particularly in the contact surfaces therebetween) for providing or enhancing a gas flow path within the TIG torch 300, particularly to ensuring applying the shielding gas around the tip of the electrode 370 during welding operation. Further, in some implementation, a gas flow control element 330 may be used to enable creating shielding gas chamber(s) 360 around the electrode holder 320 (and below the torch head 312) within the nozzle 340. The use of gas flow control element 330 may ensure that the shielding gas chamber(s) 360 form semi-sealed high pressure space. Further, the gas flow control element 330 may be configured for optimizing the gas flow. For example, the gas flow control element 330 may incorporate suitable structure (e.g., honeycomb or the like) for facilitating laminar gas flow from the shielding gas chamber(s) 360.

In some implementations, the TIG torch 300 (or components thereof) may incorporate features for securing the gas flow control element 330 in place. For example, the gas flow control element 330 may incorporate a hole through which the electrode 370 may extend, but which is smaller than the front-end (head section) of the electrode holder 320. Further, the nozzle 340 may incorporate a shoulder 342 for holding the gas flow control element 330 in place, such as in combination with the contact between the gas flow control element 330 and the electrode holder 320 on the other side, as shown in Fig. 3. Thus, when assembling the TIG torch 300, the gas flow control element 330 may be inserted into the nozzle 340 first, and then the combination of nozzle 340 and the gas flow control element 330 are secured onto the torch head 312. The disclosure is not limited to such design, however, and other mechanisms may be used for securing the securing the gas flow control element 330 in place. For example, in some implementations, the nozzle 340 may be configured for securely engaging the gas flow control element 330, and doing so autonomously, such as by incorporating featuring for facilitating use of particular securing mechanism. Similarly, in other implementations, the electrode holder 320 may be configured for securely engaging the gas flow control element 330, and doing so autonomously, such as by incorporating featuring for facilitating use of particular securing mechanism. Suitable securing mechanisms that may be used may include threading based mechanisms, snapping mechanisms, and the like.

Because electrodes may come in different sizes (diameters), different instances of the electrode holder 320 may be used, each corresponding to and configured (e.g., the internal space/hole therein) to match particular standard electrode size. In some implementations, the electrode holder 320 may incorporate re-sizing features to enable accommodating multiple different electrode sizes (diameters).

To accommodate the different electrode sizes (diameters), different instances of the gas flow control element 330 may also be used, each corresponding to and configured to match particular standard electrode size. However, in some implementations, the gas flow control element 330 may be configured to engage only electrodes of pre-selected maximum diameter. For example, where the gas flow control element 330 incorporates a hole through which the electrode 370 may extend, the hole may have a dimeter corresponding to the pre-selected maximum diameter. In such implementations, other measures may be used to accommodate electrode of smaller sizes (diameters). For example, the electrode holder 320 may incorporate one or more fitting features configured to enable engaging an electrode with a diameter that is smaller than the pre-selected maximum diameter while also engaging the gas flow control element 330 that is configured based on the pre-selected maximum diameter. Such implementation is illustrated in and described in more detail with respect to Fig. 4.

Fig. 4 illustrates an example tungsten inert gas welding (TIG) torch with gas lens interfacing collet, in accordance with an alternative embodiment based on the present disclosure. Shown in Fig. 3 is tungsten inert gas welding (TIG) torch 400 (or portion thereof).

The TIG torch 400 may be substantially similar to the TIG torch 300 of Fig. 3, and as such may comprise similar components and/or may be configured (and may function) in substantially similar manner as described above. In this regard, the TIG torch 400 may similarly incorporate an electrode holder 420 that is similar to the electrode holder 320, and which may similarly may engage a torch head 412 of the TIG torch 400, while also engaging and holding a non-consumable electrode 470 (e.g., tungsten electrode), in the same manner as described with respect to Fig. 3. However, as illustrated in Fig. 4, the electrode holder 420 may be configured to engage and operate in conjunction with a gas flow control element 430 that is configured to engage electrodes of different sizes (diameters).

In this regard, as noted above, in some implementations, gas flow control elements (e.g., the gas flow control element 430) may be configured to engage only electrodes of pre-selected maximum diameter. For example, where the gas flow control element 430 incorporates a hole through which the electrode 470 may extend, the hole may have a dimeter corresponding to the pre-selected maximum diameter. The electrode holder 420, however, may be configured to engage electrode of smaller sizes (diameters). As such, to enable operation in conjunction with gas flow control elements such as the gas flow control element 430, the electrode holder 420 may incorporate one or more fitting features configured to enable engaging an electrode with a diameter that is smaller than the pre-selected maximum diameter while also engaging the gas flow control element 430 that is configured based on the pre-selected maximum diameter.

For example, as illustrated in Fig. 4, the electrode holder 420, or the front-end part thereof that engages-that is, is contact with the gas flow control element 430-may incorporate a clearance filler A₁ and a shoulder A₂. In this regard, the clearance filler A₁ may be configured (e.g., sized) to fill up the space between the smaller sized electrode 470 and the walls of the hole in the gas flow control element 430, which is sized based on the pre-selected maximum diameter. Similarly, the shoulder A₂ may be configured (sized) to ensure providing contact surface between the electrode holder 420 and the gas flow control element 430-e.g., with shoulder A₂ extending beyond the hole of the gas flow control element 430.

An example welding-type system, in accordance with the present disclosure, comprises an electrode holder configured for use in conjunction with an arc welding based welding-type torch, a gas nozzle configured to engage a torch head of the welding-type torch, and a gas flow control component, wherein the electrode holder is configured to engage a non-consumable electrode, the gas flow control component comprises a hole through which the electrode extends, the electrode holder is configured to be secured in place via one or more holder securing features configured to engage the electrode holder onto one or both of the torch head and a back cap at a back-end of the welding-type torch, and the torch head comprises a nozzle securing element configured to secure the gas nozzle onto the torch head.

In an example embodiment, the gas flow control component is configured to be secured in place by one or both of the gas nozzle and the electrode holder.

In an example embodiment, the gas nozzle comprises a gas flow control component securing element configured to secure the gas flow control component in place against the electrode holder.

In an example embodiment, the gas flow control component securing element comprises a shoulder having a diameter smaller than a diameter of the gas flow control component.

In an example embodiment, the nozzle securing element comprises one or more O-rings.

In an example embodiment, the one or more O-rings are replaceable.

In an example embodiment, the gas flow control component is configured to engage electrodes of a pre-selected maximum diameter, and wherein electrode holder comprises one or more fitting features configured to enable engaging an electrode with a second diameter that is smaller than the pre-selected maximum diameter.

In an example embodiment, the hole of the gas flow control component matches the pre-selected maximum diameter.

In an example embodiment, the one or more fitting features comprise one or both of a shoulder and a clearance filler.

In an example embodiment, the clearance filler has an external diameter that matches the pre-selected maximum diameter and an interior space or hole with an interior diameter matching the second diameter.

In an example embodiment, the torch head of the welding-type torch comprises an overmolding configured to engage one end of the gas nozzle.

In an example embodiment, the torch head comprises a tapered surface and the electrode holder comprises a corresponding enlarged section, wherein the tapered surface and the corresponding enlarged section of the electrode holder are configured to provide sealed or near-sealed interface between the electrode holder and the torch head once the electrode holder is secured in place.

In an example embodiment, the one or more holder securing features comprising one or more screwing or threading features for use in engaging the electrode holder onto the back cap.

In an example embodiment, the one or more holder securing features comprising screwing or threading features for use in engaging the electrode holder onto the torch head.

In an example embodiment, welding-type system further comprises one or more gripping features for enabling or enhancing gripping of the electrode by the electrode holder when the electrode holder is secured in place.

In an example embodiment, the one or more gripping features comprise a slit or space in the electrode holder.

In an example embodiment, the one or more holder securing features are further configured to provide or enhance a gas flow path between the electrode holder and the torch head once the electrode holder is secured in place.

In an example embodiment, the electrode holder is configured to be further secured in place by the gas flow control component.

In an example embodiment, an end of the electrode holder that engages the gas flow control component is larger than the hole of the gas flow control component, to enable further securing the electrode holder in place by the gas flow control component.

In an example embodiment, the electrode holder is configured to engage the back cap at a back-end of the welding-type torch.

In an example embodiment, the electrode holder is removable from the welding-type torch.

In an example embodiment, the welding-type system comprises a tungsten inert gas welding (TIG) based system.

In an example embodiment, the welding-type torch comprises a TIG based torch.

Other implementations in accordance with the present disclosure may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various implementations in accordance with the present disclosure may be realized in hardware, software, or a combination of hardware and software. The present disclosure may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip.

Various implementations in accordance with the present disclosure may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present disclosure has been described with reference to certain implementations, it will be understood by those skilled in the art that various changes may be made and equivalents may be substituted without departing from the scope of the present disclosure. For example, block and/or components of disclosed examples may be combined, divided, re-arranged, and/or otherwise modified. In addition, many modifications may be made to adapt a particular situation or material to the teachings of the present disclosure without departing from its scope. Therefore, it is intended that the present disclosure not be limited to the particular implementation disclosed, but that the present disclosure will include all implementations falling within the scope of the appended claims.

Aspects of the disclosure are set out in the following numbered clauses:
Clause 1. A welding-type system, comprising:
   an electrode holder configured for use in conjunction with an arc welding based welding-type torch;
   a gas nozzle configured to engage a torch head of the welding-type torch; and
   a gas flow control component;
   wherein:
      the electrode holder is configured to engage a non-consumable electrode;
      the gas flow control component comprises a hole through which the electrode extends;
      the electrode holder is configured to be secured in place via one or more holder securing features configured to engage the electrode holder onto one or both of the torch head and a back cap at a back-end of the welding-type torch;
      the torch head comprises a nozzle securing element configured to secure the gas nozzle onto the torch head.
Clause 2. The welding-type system according to clause 1, wherein the gas flow control component is configured to be secured in place by one or both of the gas nozzle and the electrode holder.
Clause 3. The welding-type system according to clause 2, wherein the gas nozzle comprises a gas flow control component securing element configured to secure the gas flow control component in place.
Clause 4. The welding-type system according to clause 3, wherein the gas flow control component securing element comprises a shoulder having a diameter smaller than a diameter of the gas flow control component.
Clause 5. The welding-type system according to clause 1, wherein the nozzle securing element comprises one or more O-rings.
Clause 6. The welding-type system according to clause 5, wherein the one or more O-rings are replaceable.
Clause 7. The welding-type system according to clause 1, wherein the gas flow control component is configured to engage electrodes of a pre-selected maximum diameter, and wherein electrode holder comprises one or more fitting features configured to enable engaging an electrode with a second diameter that is smaller than the pre-selected maximum diameter.
Clause 8. The welding-type system according to clause 7, wherein the hole of the gas flow control component matches the pre-selected maximum diameter.
Clause 9. The welding-type system according to clause 7, wherein the one or more fitting features comprise one or both of a shoulder and a clearance filler.
Clause 10. The welding-type system according to clause 7, wherein the clearance filler has an external diameter that matches the pre-selected maximum diameter and an interior space or hole with an interior diameter matching the second diameter.
Clause 11. The welding-type system according to clause 1, wherein the torch head of the welding-type torch comprises an overmolding configured to engage one end of the gas nozzle.
Clause 12. The welding-type system according to clause 1, the torch head comprises a tapered surface and the electrode holder comprises a corresponding enlarged section, wherein the tapered surface and the corresponding enlarged section of the electrode holder are configured to provide contact interface between the electrode holder and the torch head once the electrode holder is secured in place.
Clause 13. The welding-type system according to clause 1, wherein the one or more holder securing features comprising one or more screwing or threading features for use in engaging the electrode holder onto the back cap.
Clause 14. The welding-type system according to clause 1, wherein the one or more holder securing features comprising screwing or threading features for use in engaging the electrode holder onto the torch head.
Clause 15. The welding-type system according to clause 1, further comprising one or more gripping features for enabling or enhancing gripping of the electrode by the electrode holder when the electrode holder is secured in place.
Clause 16. The welding-type system according to clause 15, wherein the one or more gripping features comprise a slit or spacing in the electrode holder.
Clause 17. The welding-type system according to clause 1, wherein the one or more holder securing features are further configured to provide or enhance a gas flow path between the electrode holder and the torch head once the electrode holder is secured in place.
Clause 18. The welding-type system according to clause 1, wherein the electrode holder is configured to be further secured in place by the gas flow control component.
Clause 19. The welding-type system according to clause 18, wherein an end of the electrode holder that engages the gas flow control component is larger than the hole of the gas flow control component, to enable further securing the electrode holder in place by the gas flow control component.
Clause 20. The welding-type system according to clause 1, wherein the electrode holder is configured to engage the back cap at a back-end of the welding-type torch.
Clause 21. The welding-type system according to clause 1, wherein the electrode holder is removable from the welding-type torch.
Clause 22. The welding-type system according to clause 1, wherein the welding-type system comprises a tungsten inert gas welding (TIG) based system.
Clause 23. The welding-type system according to clause 1, wherein the welding-type torch comprises a tungsten inert gas welding (TIG) based torch.

## Claims

1. A welding-type system, comprising:
an electrode holder configured for use in conjunction with an arc welding based welding-type torch;
a gas nozzle configured to engage a torch head of the welding-type torch; and
a gas flow control component;
wherein:
the electrode holder is configured to engage a non-consumable electrode;
the gas flow control component comprises a hole through which the electrode extends;
the electrode holder is configured to be secured in place via one or more holder securing features configured to engage the electrode holder onto one or both of the torch head and a back cap at a back-end of the welding-type torch;
the torch head comprises a nozzle securing element configured to secure the gas nozzle onto the torch head.

2. The welding-type system according to claim 1, wherein the gas flow control component is configured to be secured in place by one or both of the gas nozzle and the electrode holder, optionally wherein the gas nozzle comprises a gas flow control component securing element configured to secure the gas flow control component in place, and optionally wherein the gas flow control component securing element comprises a shoulder having a diameter smaller than a diameter of the gas flow control component.

3. The welding-type system according to claim 1, wherein the nozzle securing element comprises one or more O-rings, optionally wherein the one or more O-rings are replaceable.

4. The welding-type system according to claim 1, wherein the gas flow control component is configured to engage electrodes of a pre-selected maximum diameter, and wherein electrode holder comprises one or more fitting features configured to enable engaging an electrode with a second diameter that is smaller than the pre-selected maximum diameter, optionally wherein:
the hole of the gas flow control component matches the pre-selected maximum diameter, or
the one or more fitting features comprise one or both of a shoulder and a clearance filler, or
the clearance filler has an external diameter that matches the pre-selected maximum diameter and an interior space or hole with an interior diameter matching the second diameter.

5. The welding-type system according to claim 1, wherein the torch head of the welding-type torch comprises an overmolding configured to engage one end of the gas nozzle.

6. The welding-type system according to claim 1, the torch head comprises a tapered surface and the electrode holder comprises a corresponding enlarged section, wherein the tapered surface and the corresponding enlarged section of the electrode holder are configured to provide contact interface between the electrode holder and the torch head once the electrode holder is secured in place.

7. The welding-type system according to claim 1, wherein the one or more holder securing features comprising one or more screwing or threading features for use in engaging the electrode holder onto the back cap.

8. The welding-type system according to claim 1, wherein the one or more holder securing features comprising screwing or threading features for use in engaging the electrode holder onto the torch head.

9. The welding-type system according to claim 1, further comprising one or more gripping features for enabling or enhancing gripping of the electrode by the electrode holder when the electrode holder is secured in place, and optionally wherein the one or more gripping features comprise a slit or spacing in the electrode holder.

10. The welding-type system according to claim 1, wherein the one or more holder securing features are further configured to provide or enhance a gas flow path between the electrode holder and the torch head once the electrode holder is secured in place.

11. The welding-type system according to claim 1, wherein the electrode holder is configured to be further secured in place by the gas flow control component, and optionally wherein an end of the electrode holder that engages the gas flow control component is larger than the hole of the gas flow control component, to enable further securing the electrode holder in place by the gas flow control component.

12. The welding-type system according to claim 1, wherein the electrode holder is configured to engage the back cap at a back-end of the welding-type torch.

13. The welding-type system according to claim 1, wherein the electrode holder is removable from the welding-type torch.

14. The welding-type system according to claim 1, wherein the welding-type system comprises a tungsten inert gas welding (TIG) based system.

15. The welding-type system according to claim 1, wherein the welding-type torch comprises a tungsten inert gas welding (TIG) based torch.
